# EUROPEAN PATENT APPLICATION

(11) **EP 1 109 414 A2**
(43) Date of publication of application: **20.06.2001**
(21) Application number: 00204439.4
(22) Date of filing: 12.12.2000
(51) Int. Cl.: H04Q 7/22

(54) **Improvements in or relating to information transmission systems**

(30) Priority: 15.12.1999 GB 9929488
(71) Applicant: ROKE MANOR RESEARCH LIMITED, Romsey, Hampshire SO51 0ZN (GB)
(72) Inventor: Richards, Lawrence, Winchester, Hampshire SO21 2HD (GB); Stein, Paul, Eastleigh, Hants SO53 5DQ (GB); Waters, Julia, Salisbury, Wiltshire SP5 2HN (GB)
(74) Representative: Allen, Derek

(57) **Abstract**

An information transmission system which comprises a system base station including; a transmitter arranged for communication with a plurality of mobile receiver units, via a mobile radio system; a CPU in which data is registered appertaining to a plurality of different subjects; an alert signal generator; and an SMS (Short Message Service) message generator, the alert signal generator being responsive to data stored in the CPU for initiating the generation of an appropriate SMS message by the SMS message generator for transmission via the transmitter and the mobile radio system to a mobile receiver units or units, consequent upon registration in the CPU of data appertaining to a predetermined subject. The system is especially suitable for use in airport passenger flight departure information applications, wherein the mobile receiver units are carried by passengers and used to update them with flight data using the SMS.

## Description

This invention relates to information transmission systems and more especially but not exclusively it relates to the provision of such systems for facilitating airport passenger flight departure procedures.

At present, passenger notification to indicate when a flight is ready for boarding, is effected largely by means of continuously updated TV displays which are placed in the departure lounge at convenient locations so that passengers waiting for a particular flight can consult the display from time to time to gather the necessary information concerning when and where to board and/or concerning possible flight changes or delays if appropriate, which unfortunately are all too common. This presently used system of passenger notification although generally satisfactory, is, under certain circumstances, somewhat unreliable since it relies on passengers to inspect the displayed information at frequent intervals. For example in the case of prolonged delays or unexpected flight departure time changes, passengers may be less alert and may even miss public address appeals which are normally reserved for urgent announcements only.

It is an important object of this invention to provide a system which obviates the aforementioned shortcomings of present systems, at least in part.

According to the present invention, an information transmission system comprises a system base station including; a transmitter arranged for communication with a plurality of mobile receiver units, via a mobile radio system; a CPU in which data is stored appertaining to a plurality of different subjects; an alert signal generator; and an SMS (Short Message Service) message generator, the alert signal generator being responsive to data stored in the CPU for initiating the generation of an appropriate SMS message by the SMS message generator for transmission via the transmitter and via the mobile radio system to a mobile receiver units or units, consequent upon registration in the CPU of data appertaining to a predetermined subject.

The subjects stored may include the occurrence of different events and the message generator may be arranged to be responsive to registration in the CPU of a predetermined event or events for initiating the generation the said SMS message.

In a system according to one contemplated embodiment of the invention, used to facilitate airport flight departure procedures, the mobile receiver units may comprise mobile phone receivers each having a unique phone number for reception of targeted SMS message transmissions from the mobile radio system, sent thereto from the transmitter, and the CPU may comprise databases for passenger check-in data, flight data, data appertaining to the phone numbers of passengers, and data appertaining to the occurrence of predetermined events including a 'ready to board' event, consequent upon registration of which event in the CPU, an appropriate message is routed from the SMS message generator to the transmitter for transmission to the mobile receiver units of those passengers concerned, via the mobile radio system.

The mobile phone receivers may comprise commercially available mobile phones which may belong to passengers or may alternatively be mobile phones loaned to passengers on check-in at the airport which must be returned by passengers just prior to boarding for re-use.

It will be appreciated that by using a system according to the present invention, airport check-in procedures may be improved with obvious advantages both to passengers and airport authorities/airlines alike.

It will also be readily appreciated that the SMS (Short Message Service) is a widely used service, which is well known to mobile phone users and which accordingly needs no detailed description herein.

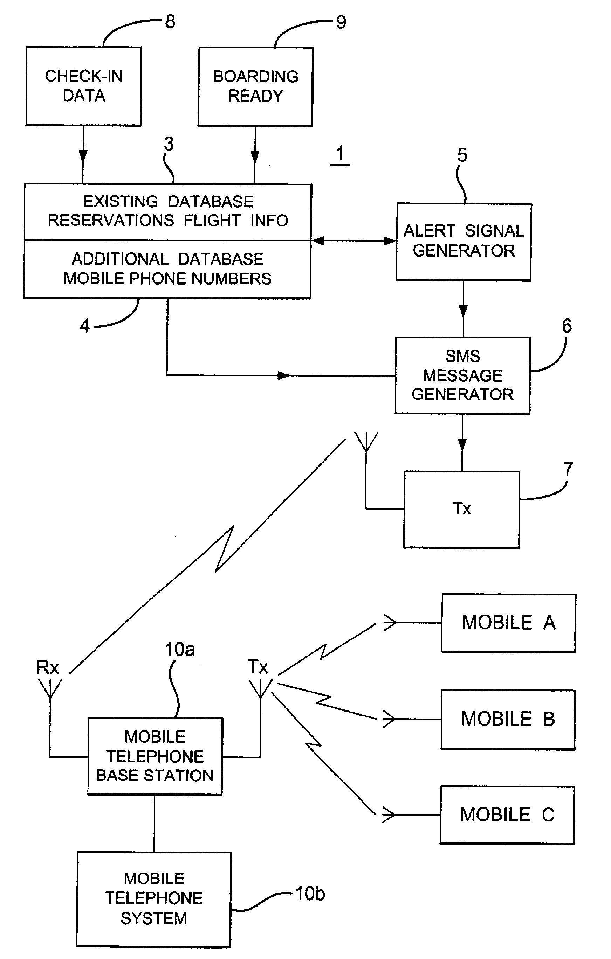

One embodiment of the invention will now be described, by way of example only, with reference to the accompanying drawing which is a generally schematic block diagram of an information transmission system for use in airports to facilitate passenger flight departure procedures.

Referring now to the drawing, a system base station 1, which is provided in an airport terminal (not specifically to facilitate provision of this invention) is used to provide for communication with a plurality of mobile phone units, including units A, B and C as shown which, are carried by passengers.

The system base station 1, comprises a CPU 2, which includes an existing database 3, used for reservations data, and flight information data and an additional database 4, for the mobile phone numbers of listed passengers and other data including data indicative of whether or not a passenger should be alerted. The system base station 1, also includes an alert signal generator 5, an SMS message generator 6, and a transmitter 7.

Operation of the system is such that consequent upon the CPU 2, receiving appropriate passenger check-in data from a store 8, and data from a further store 9, indicating that an aircraft is ready for boarding, an alert signal is produced by the generator 5, which in turn initiates the generation of an appropriate SMS message for transmission via the transmitter 7, and via a remotely located mobile radio base station 10a (which forms a part of, and which is controlled by a mobile radio telephone system 10b), to the mobile receiver units of passengers, which are selected as appropriate, having regard to flight information data and check-in data, which is conveyed to the SMS message generator 6, from the CPU 2.

Thus when a passenger's aircraft is ready for boarding, the Short Messaging Service (SMS) will be used to alert the passenger. The message might indicate which gate to go to and other information such as the time of departure. Other messages could be used to inform passengers of other information related to their flight such as delays.

It is envisaged that passengers might inform the airline of their mobile phone number either when checking in or through a previous reservation registration procedure and in this latter case, the system could also be used prior to check-in so that passengers could be informed of delays or sent other flight related information before arrival at the airport.

Although a system according to this invention is eminently suitable for use in airports, it may also be applied to other forms of transport such as ferries, trains or buses and may be extended to other non-travel related uses. It is however apparent that the system is especially useful for use in connection with appointments which may be subject to delays, such as meetings of any sort, e.g. parent teacher meetings. It may also find application where customers queue for a service and are alerted just prior to the service becoming available e.g. supermarket delicatessen queues, parent teacher meetings, car/tyre/MOT service centres.

## Claims

1. An information transmission system comprising a system base station including; a transmitter arranged for communication with a plurality of mobile receiver units, via a mobile radio system; a CPU in which data is registered appertaining to a plurality of different subjects; an alert signal generator, and; an SMS (Short Message Service) message generator; the alert signal generator being responsive to data stored in the CPU for initiating the generation of an appropriate SMS message by the SMS message generator for transmission via the transmitter and the mobile radio system to a mobile receiver units or units, consequent upon registration in the CPU of data appertaining to a predetermined subject.

2. A system as claimed in Claim 1 wherein the subjects include the occurrence of different events and the message generator is arranged to be responsive to registration in the CPU of a predetermined event or events for initiating the generation the said SMS message.

3. A system as claimed in Claim 1 or Claim 2, used to facilitate airport flight departure procedures, wherein the mobile receiver units comprise mobile phone receivers each having a unique phone number for reception of targeted SMS message transmissions from the mobile radio base station, sent thereto from the transmitter, and wherein the CPU includes databases for passenger check-in data, flight data, data appertaining to the phone numbers of passengers, and data appertaining to the occurrence of predetermined events including a 'ready to board' event, consequent upon registration of which event in the CPU, an appropriate message is routed from the SMS message generator to the transmitter for transmission to the mobile receiver units of those passengers concerned, via the mobile radio system.

4. A system as claimed in Claim 3, wherein the mobile phone receivers comprise commercially available mobile phones which belong to passengers or which are alternatively loaned to passengers on check-in at the airport.

5. A system as claimed in Claim 1 and substantially as described with reference to the accompanying drawing.
